# EUROPÄISCHE PATENTANMELDUNG

(11) **EP 0 818 521 A2**
(43) Veröffentlichungstag der Anmeldung: **14.01.1998**
(21) Anmeldenummer: 97110266.0
(22) Anmeldetag: 24.06.1997
(51) Int. Cl.: C09J 7/02

(54) **Selbstklebeband**

(30) Priorität: 12.07.1996 DE 19628177
(71) Anmelder: Beiersdorf Aktiengesellschaft, 20245 Hamburg (DE)
(72) Erfinder: Schacht, Wolfgang, Dr., 21629 Neu Wulmstorf (DE); Gereke, Robert, Dr., 20257 Hamburg (DE); Henke, Frank, Dr., 21629 Neu Wulmstorf/Elsdorf (DE); Stähr, Jochen, 30179 Hannover (DE)

(57) **Zusammenfassung**

Druckempfindliches doppelseitiges Selbstklebeband für dauerhafte, irreversible Verklebungen, dadurch gekennzeichnet, daß das Selbstklebeband
eine Trägerschicht auf der Basis von Kautschuken mit Doppelbindungen in der Hauptkette, wobei die Kautschuke derartig vernetzt sind, daß die Kautschuke gummielastisches Verhalten aufweisen, und
eine beidseitig auf die Trägerschicht beschichtete, druckempfindliche Selbstklebemasse auf Basis eines Acrylats aufweist

## Beschreibung

Die Erfindung beschreibt ein beidseitig klebendes Selbstklebeband, wie es insbesondere zur Erzielung von sehr dauerhaften, auch bei erhöhten Temperaturen haltbaren Verklebungen von Gegenständen mit Unebenheiten in den zu verklebenden Oberflächen eingesetzt wird.

Um höhere Festigkeiten gegenüber Abschälen und Scherkräften zu erreichen, ist der Einsatz unterschiedlicher Klebebänder bekannt.

In der DE-PS 21 05 877 wird ein Klebeband aufgezeigt, das aus einem Träger besteht, der auf mindestens einer Seite mit einem mikrozellulären druckempfindlichen Klebstoff beschichtet ist und dessen Klebstoffschicht einen Keimbildner enthält, wobei die Zellen der Klebstoffschicht geschlossen und vollständig in der Klebstoffschicht verteilt sind. Dieses Klebeband kann sich der unregelmäßigen Oberfläche, auf die es gebracht wird, anpassen und somit zu einer relativ dauerhaften Verklebung führen, zeigt andererseits auch nur eine geringe Erholung, wenn es auf die Hälfte der ursprünglichen Dicke zusammengedrückt worden ist. Die Hohlräume in der Klebmasse bieten allerdings einerseits Nachteile in Bezug auf die Festigkeit der Klebverbindung bei erhöhten Anwendungstemperaturen und andererseits Ansätze für seitliches Eintreten von Lösungsmitteln und Wasser in die Klebfuge, was sehr unerwünscht ist. Weiterhin kann der vollständige Durchtritt von Lösungsmitteln oder Wasser durch das gesamte Klebeband nicht ausgeschlossen werden.

So beschreibt die DE-PS 28 21 606 ein druckempfindliches Klebeband mit einer Klebstoffschicht auf einem Trägermaterial, in der Glasmikrohohlkugeln mit einem Anteil von bis zu 60 Volumenprozent der Klebstoffschicht dispergiert sind. Dieses Klebeband bietet aufgrund seines Aufbaus eine gute Festigkeit gegenüber den oben genannten Belastungen. Denn das Band besitzt den technischen Vorteil, sich von Unebenheiten des Untergrundes kaum abzuheben, weil diesem die elastische Erholung fehlt, nachdem ein Druck eine Zeitlang auf dieses ausgeübt worden ist. Aber auch dies Klebeband ist mit einigen Nachteilen behaftet. So sind Glasmikrohohlkugeln sehr empfindliche Körper, die beim Einarbeiten in die Klebstoffschicht, beim Lagern, insbesondere aber beim Einsatz des Bandes zum Zerplatzen neigen, mit anschließenden Folgeproblemen aufgrund der entstehenden Splitter.

In der DE-OS 40 29 896 wird ein trägerloses, beidseitig klebendes Selbstklebeband aus einer druckempfindlichen Klebstoffschicht, die Glasmikrovollkugeln enthält, beschrieben.

Die DE-OS 33 03 834 offenbart ein Verfahren zur Herstellung eines elastischen, doppelseitigen Klebebandes, das einen Träger aus Naturkautschuk aufweist. Als Klebebeschichtungen werden ebenfalls solche auf Basis von Naturkautschuk eingesetzt. Ein derartiges Klebeband ist zwar relativ preiswert in der Herstellung, ist aber für dauerhafte Hochleistungsverbindungen, insbesondere in extremen Temperaturbereichen, nicht oder nur sehr eingeschränkt geeignet.

In den Patentschriften US 4 440 829 und US 4 061 805 werden Klebebänder offenbart, die jeweils einen Träger aus Kautschuk, im wesentlichen einen Butylkautschuk, aufweisen, der mit einem druckempfindlichen Kleber beschichtet ist und der als Zuschlagstoff mit einem Pigment und Weichmacher versehen ist. Bedingt durch die Festlegung auf Butylkautschuk sowie auf Kautschuke, die wenig oder nicht elastisch sind, bestehen bei diesem Klebeband Festigkeitsnachteile der Klebverbindung insbesondere bei erhöhten Anwendungstemperaturen aufgrund der nur unvollständig möglichen Vernetzung der Polymermatrix. Eine dauerhafte Verklebung unter starker Belastung und erhöhter Temperatur ist mit den offenbarten Klebebändern nicht möglich, das Trägermaterial fließt bei solchen Anwendungsfällen, der Verbund zwischen Klebeband und zu verklebendem Objekt löst sich.
Zudem ist eine Elektronenstrahlvernetzung von Butylkautschuk beim Einsatz als Klebebandträger nicht möglich.

In der Patentschrift US 4 024 312 wird ein Selbstklebeband beschrieben, das als Trägerschicht einen Film aus einer elastomeren und einer thermoplastischen Masse verwendet. Die elastomere Komponente besteht im wesentlichen aus linearen oder radialen A-B-A-Blockmischpolymerisaten oder Gemischen dieser linearen oder radialen A-B-A-Mischpolymerisaten mit einfachen A-B-Blockmischpolymerisaten, wobei die A-Blöcke von Styrol oder Styrolhomologen und die B-Blöcke von konjugierten Dienen oder niederen Alkenen abstammen. Als Klebstoffschicht findet eine normalklebrige. druckempfindliche elastomere Masse Verwendung. Dies Klebeband ist aber für dauerhafte Verklebungen bei erhöhten Temperaturen nicht geeignet, da unter diesen Bedingungen naturgemäß das Erweichen der Styrolblöcke zu einem Fließen des Gesamtsystems und damit zum Versagen der Verklebung führt.

Vielmehr ist das erfindungsgemäße Klebeband ausdrücklich für eine leichte Wiederablösbarkeit durch Längsdehnung geeignet.

Allen genannten Klebebändern ist gemeinsam, daß die aufnehmbaren Scherkräfte, die auf die geklebte Verbindung einwirken, für viele Einsatzfälle nicht ausreichend sind, um eine dauerhafte Verbindung zwischen Untergrund und dem mittels des Klebebandes zu montierenden Gegenstandes zu gewährleisten. So ist insbesondere bei tieferen und bei erhöhten Temperaturen die Verwendung derartiger Klebebänder nur sehr eingeschränkt möglich. Bei tiefen Temperaturen tritt eine Versprödung des Trägers auf, so daß das Klebeband nicht mehr in der Lage ist, die gewünschte Verklebung aufrechtzuerhalten. Bei erhöhten Temperaturen und hohen mechanischen Belastungen treten im Falle unvollständiger Vernetzung des Trägers Schwächen in der Klebverbindung auf, oder es kommt, im Falle geschäumter Träger, zu starker Verformung.

Der Erfindung liegt die Aufgabe zugrunde, ein Selbstklebeband zu schaffen, das die Nachteile des Standes der Technik nicht oder zumindest nicht in dem Umfang aufweist und das dennoch nicht in seiner Einsatzfähigkeit ähnlich den vorbekannten Produkten eingeschränkt ist.

Zur Lösung dieser Aufgabe schlägt die Erfindung ein druckempfindliches, beidseitig mit Selbstklebemassen auf Basis eines Acrylats beschichtetes Selbstklebeband vor, das eine auf Kautschuken mit Doppelbindungen in der Hauptkette basierende Trägerschicht aufweist, wobei die Kautschuke derartig vernetzt sind, daß die Kautschuke gummielastisches Verhalten aufweisen.

Als Basismaterial für die Trägerschicht werden Kautschuke eingesetzt. Bei den erfindungsgemäßen Kautschuken handelt es sich um Polymere mit Doppelbindungen in der Hauptkette, insbesondere entweder um Natur-, Acrylnitril-Butadien-, oder Random-Styrol-Butadien-Kautschuk oder um ein Blend der genannten Kautschuke. Ganz besonders bevorzugt werden Blends aus Natur- und Random-Styrol-Butadien-Kautschuk.

Die für die Trägerschicht verwendeten Kautschuke sind vorteilhafterweise physikalisch - beispielsweise durch eine Vernetzung unter Verwendung von Elektronenstrahlen - oder chemisch vernetzt.

Zur Erhöhung der Standfestigkeit des Klebebandes kann dies mit üblichen Alterungsschutzmitteln, die je nach Anwendungsfall aus der Klasse der verfärbenden oder nicht verfärbenden Alterungsschutzmitteln stammen können, insbesondere im Bereich zwischen 0 bis 10 phr, sowie bekannten Lichtschutzmitteln oder Ozonschutzmitteln gefüllt werden. Darüber hinaus ist eine Abmischung mit Vulkanisationsmitteln (wie beispielsweise Peroxiden oder Schwefel, Schwefelspendern oder Beschleunigern) und/oder der Zusatz von Fettsäure, insbesondere im Bereich von 0 bis 10 phr, sowie die Verwendung von Weichmachern möglich.

Um die gewünschten Eigenschaften des Trägers gezielt einzustellen, kann gegebenenfalls die Verwendung von weiteren Füllstoffen erfolgen. So kann der Kautschuk mit verstärkenden, semiverstärkenden oder nicht verstärkenden Rußen insbesondere zwischen 0 bis 80 phr, Zinkoxid insbesondere zwischen 0 bis 70 phr und/oder anderen Füllstoffen wie Kieselsäure, Silikaten oder Kreide versetzt werden. Neben den genannten ist auch die Verwendung weiterer Füllstoffe möglich. Weiterhin können auch Harze aus der Klasse der Phenol- und/oder Kohlenwasserstoffharze im Bereich insbesondere zwischen 0 bis 75 phr zugesetzt werden.

Alle diese genannten Zusatzstoffe können je nach Einsatzzweck des Selbstklebebandes entweder allein oder in beliebiger Kombination miteinander zur Herstellung der Kautschukmischung eingesetzt werden, um eine optimale Abstimmung auf die Verwendung zu erhalten.

Durch den Einsatz dieser Zusatzstoffe ist auch die Schwarzfärbung des Trägers, wie sie von der Industrie i.a. gefordert wird, problemlos möglich.

Die Trägerschicht weist eine Dicke von 200 µm bis 2000 µm, insbesondere 400 µm bis 1200 µm, auf.

Als Füllstoff zur Modifizierung der Trägereigenschaften können der Kautschukrezeptur Mikrovollkugeln mit einem Volumenanteil von 1 Vol.-% bis 50 Vol.-%, insbesondere 10 Vol.-% bis 30 Vol.-%, zugesetzt werden Die in der Trägerrezeptur enthaltenen Mikrovollkugeln bewirken besonders vorteilhafte Eigenschaften des erfindungsgemäßen Selbstklebebandes, wenn es sich bei den Mikrovollkugeln um Glasmikrovollkugeln mit einem Durchmesser von 1 µm bis 100 µm, insbesondere 10 µm bis 60 µm, und einer Dichte von 1,8 g/cm³ bis 6,0 g/cm³, insbesondere 1,9 g/cm³ bis 4,0 g/cm³, handelt.

Die Anfertigung der Trägermischung findet vorzugsweise in einem für die Elastomer-Compoundierung typischen Innenmischer statt. Die Kautschukmischung wird dabei insbesondere auf einen Mooneywert ML₁₊₃ (100 °C) im Range von 40 bis 80 eingestellt. Vorzugsweise erfolgt eine lösungsmittelfreie Verarbeitung. Der Kautschukmischung werden gegebenenfalls gleichzeitig die gewünschten Mikrovollkörper zugesetzt. Die Kautschukmischung kann anschließend auf handelsüblichen Maschinen auf die gewünschte Dicke extrudiert oder kalandert werden. Dabei ergibt sich eine Dicke der Trägerschicht innerhalb der oben angeführten Bereiche.

Im Anschluß kann die Vernetzung des Trägers durch Elektronenstrahlen oder durch bekannte chemische Vernetzer erfolgen.

Auf die bekannte Technologie der Kautschuk-Verarbeitung und den bekannten, dafür eingesetzten Additiven, etwa gemäß dem Buch von Werner Kleemann (Werner Kleemann: 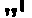 Mischungen für die Elastverarbeitung", Deutscher Verlag für Grundstoffindustrie, Leipzig 1982), wird ausdrücklich Bezug genommen.

Um die Verankerung der Klebemasse auf dem Kautschukträger zu erhöhen, können bekannte Haftvermittler zugesetzt werden. Weiterhin kann das Aufbringen eines Primers auf Epoxidbasis auf die Trägerschicht erfolgen.

Alternativ dazu kann auch eine Coronavorbehandlung des Trägers vorgenommen werden. Um besonders feste Verankerungen zu erzielen, ist auch eine Kombination der aufgeführten Verfahren möglich.

Durch Verwendung von Sperrschichten, insbesondere auf Polyamidbasis, mit einer ausreichenden Schichtdicke von 2 µm bis 10 µm, vorzugsweise 2 µm bis 4 µm, kann die Leistungsfähigkeit des Verbundes auch bei Verwendung migrierender Kautschukchemikalien in der Trägerrezeptur und bei Lagerung unter erhöhten Temperaturen gesichert werden.

Die druckempfindliche Selbstklebemasse besteht vorzugsweise aus an sich bekannten Copolymerisaten von n-Butyl-Acrylat mit 2-Etylhexylacrylat und Acrylsäure, vorzugsweise mit einer Zusammensetzung von 60 Gew.-% bis 70 Gew.-% n-Butylacrylat, 20 Gew.-% bis 40 Gew.-% 2-Etylhexylacrylat und 0 Gew.-% bis 8 Gew.-% Acrylsäure.

Der Zusatz weiterer, bekannter Komponenten ist zur Erzielung bestimmter Eigenschaften möglich, insbesondere der Zusatz von Vernetzern, Klebharzen, Alterungsschutzmitteln.

Die Selbstklebemasse kann direkt aus der Lösung, Dispersion oder Schmelze oder im Transferverfahren oder durch Koextrusion mit dem Träger aufgetragen werden. Insbesondere im Fall der Koextrusion ist eine Vernetzung von Träger und Klebmasse inline durch die Elektronenstrahlhärtung vorteilhaft. Das Auftragsgewicht der Klebemasse ist ebenfalls je nach Einsatzzweck beliebig innerhalb des Bereiches von 10 g/m² bis 250 g/m², vorzugsweise 40 g/m² bis 150 g/m², wählbar.

Das Selbstklebeband zeigt durch die Kombination der beschriebenen Träger- und Klebmassenrezepturen hervorragende Eigenschaften, die derartig für den Fachmann nicht vorherzusehen waren, so daß dessen Verwendung in einem Temperaturbereich von -40 °C bis 80 °C möglich ist, wobei die Vorteile des erfindungsgemäßen Klebebandes insbesondere zwischen 70 und 80 °C deutlich werden.

Darüber hinaus sind wegen des sehr niedrigen Glaspunktes des Klebebandes gemäß Erfindung Tieftemperatureinsätze bis -40 °C möglich, weil die sonst zu beobachtende Versprödung bekannter Klebebänder nicht auftritt, so daß auch bei diesen extremen Temperaturen eine optimale Haftung des Klebebandes gewährleistet ist.

Aufgrund der hohen Flexibilität des Trägers paßt sich das Klebeband sehr gut unebenem Untergrund an, wenn es mit einem gewissen Druck auf diesen gepreßt wird. Auf diese Weise entsteht eine sehr dauerhafte Verbindung zwischen Klebeband und Untergrund, die auch bei hohen Scherkräften und Biegemomentbeanspruchungen, die auf das Selbstklebeband bei verschiedenen Testtemperaturen einwirken, nicht versagt. Wegen der fehlenden seitlich offenen Hohlräume im Träger wird auch das mögliche Eindringen von Lösungsmitteln oder Wasser in das Klebeband mit all seinen bekannten Nachteilen verhindert.

Die Verwendung der Erfindung erfolgt beispielsweise in der Möbelindustrie, wo Spiegel, Leisten oder Blenden dauerhaft mit dem Untergrund zu verankern sind.

Wegen der hervorragenden Produkteigenschaften ist der Einsatz der Erfindung aber nicht auf das genannte Beispiel beschränkt. Vielmehr ist die Verwendung des Klebebandes in vielen Industriebereichen als Montagematerial möglich, wenn es gilt, auf einer relativ unebenen Oberfläche eine sichere Verbindung zwischen zwei Teilen unterschiedlichster Materialien zu schaffen.

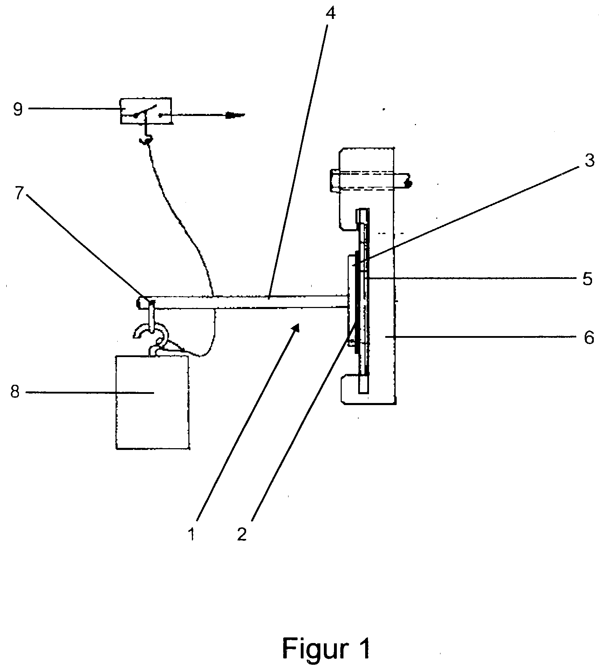

Anhand der Figur 1 soll im folgenden der Versuchsaufbau näher beschrieben werden, mit dem die hohe mechanische Belastbarkeit des beidseitig klebenden Selbstklebebandes getestet wird, und zwar erfolgt dies nach der sogenannten Wandhakenprüfung.

Mittels eines stempelförmigen Wandhakens 1 wird das Selbstklebeband 2 einer Biegemomentbeanspruchung unterworfen. Der Wandhaken 1 besteht aus einer quadratischen Stahlplatte 3 aus V2A-Stahl mit 30 mm Kantenlänge und 3 mm Dicke. In der Mitte der Stahlplatte 3 ist ein Rundstab 4 als Hebelarm befestigt, welcher eine Länge von 90 mm und einen Durchmesser von 5 mm aufweist. Die Stahlplatte 3 wird mit dem zu testenden Selbstklebeband 2 auf eine zweite Stahlplatte 5 aus V2A-Stahl verklebt. Die zweite Stahlplatte 5 befindet sich in einer entsprechend geformten Halterung 6.

In dem Punkt 7, welcher genau 90 mm Abstand zu der verklebten Seite der Stahlplatte 3 des Wandhakens 1 hat, wird ein Gewicht 8 an den Rundstab 4 gehängt, welches eine Hebelkraft von 10 N erzeugt.

Die verklebten Flächen der Stahlplatten 3 und 5 müssen völlig eben und mittels Schmirgelpapier (FEPA-Körnung 240) feingeschliffen sein. Zur Bewahrung der Oberfläche und Vermeidung von Fettspuren auf der Oberfläche sind die Stahlplatten 3 und 5 in Toluol zu lagern. Vor Verwendung müssen die Stahlplatten 3 und 5 mit Aceton gereinigt und danach fünf Minuten abgelüftet werden.

Vor dem Beginn der Wandhakenprüfung muß das Selbstklebeband 2 bei einer Temperatur von 22 °C und 55 % relativer Luftfeuchtigkeit 24 h konditioniert werden.

Die Stahlplatte 3 wird mit dem zu prüfenden, paßgenau zugeschnittenen Selbstklebeband 2 auf die Stahlplatte 5 geklebt und 1 min lang mit einem Druck von 0,1 kN/cm² plan angepreßt.

Die Haltezeit in Minuten wird bei 55 % relativer Luftfeuchtigkeit und den drei Temperaturen von 22 °C, 40 °C, 70 °C ermittelt. Neben der Haltezeit wird die Verformung des Selbstklebebandes 2 beurteilt.

Versagt eine der Verklebungen des Selbstklebebandes 2 mit den Stahlplatten 3 und 5 fällt der Wandhaken 1 mitsamt des Gewichtes 8 herab. Dadurch wird ein Kontakt in einem Kontaktgeber 9 geschlossen, so daß die Zeitspanne zwischen Testbeginn und Versagen einer der Verklebungen -die Haltezeit- genau angezeigt wird.

Im Gegensatz zu den vorbekannten Selbstklebebändern werden mit dem erfindungsgemäßen Selbstklebeband hohe Standzeiten und, besonders bei erhöhter Prüftemperatur, eine minimale Verformung des Trägers und damit der Klebverbindung erreicht.

Im folgenden soll die Erfindung anhand eines Beispiel näher beschrieben werden, ohne damit die Erfindung unnötig einschränken zu wollen.

### Beispiel

Die Herstellung der Trägermischung findet in einem für die Elastomer-Compoundierung typischen Innenmischer statt. Die Kautschukmischung wird dabei auf einen Mooneywert ML₁₊₃ (100 °C) von ca. 65 eingestellt.

### Rezeptur:

| Komponente | Anteil (phr) |
|---|---|
| Random-Styrol-Butadienkautschuk 23 % Sty | 80.0 |
| Naturkautschuk CV 50 | 20.0 |
| Ruß N 660 | 25.0 |
| Reflexperlen 50µ (Fa. Lindner) | 20.0 |
| Kreide gefällt (Microsöhl, Fa. Damman) | 25,0 |
| Alterungsschutz Vulkanox SKF (Fa. Bayer) | 2,0 |

Die Kautschukmischung wird anschließend auf einem üblichem Elastomerkalander zu einer Kautschukbahn mit einer Dicke von 0,6 mm ausgezogen. Um ein Verblocken des Materials zu verhindern, wird beim Aufwickeln ein Vliespapier eingeschossen.

Das so erhaltene Trägermaterial wird beidseitig elektronenstrahlvernetzt (je Seite 100 kGy bei einer Beschleunigungsspannung von 350 kV).

Nach der Vernetzung hat der Träger eine Reißdehnung von >500 % und <1000 % und eine Festigkeit von > 4 N/mm², gemessen in Kalanderrichtung.

Der vernetzte Träger wird beidseitig mit einem Dispersionsprimer auf Epoxidbasis ausgerüstet.

Abschließend wird das Material in zwei Schritten beidseitig mit je 60 g/m² der Polyacrylatmasse Duroctac 280 - 1753 der Fa. National Starch im Transfer-Verfahren beschichtet.

Das einseitig mit Trennpapier abgedeckte doppelseitige Klebeband zeichnet sich durch hohe Klebkräfte bei gleichzeitiger hoher Scherfestigkeit aus, und die damit erzeugten Verklebungen besitzen eine exzellente Kälteschlagfestigkeit und mechanische Belastbarkeit, auch bei erhöhten Prüftemperaturen.

In Tabelle 1 sind die Ergebnisse der oben beschriebenen Wandhakenprüfung für ein Klebeband gemäß dem aufgeführten Beispiel mit den typischen Werten vorbekannter Selbstklebebänder gegenübergestellt.

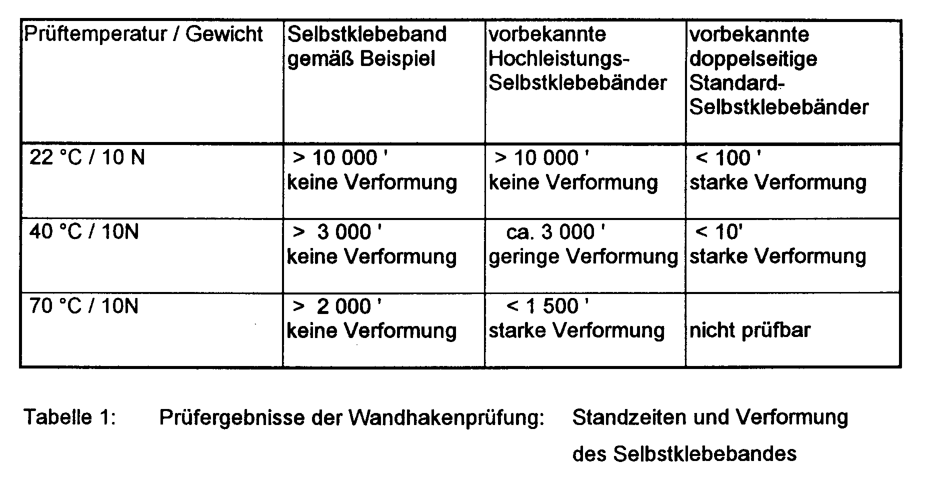

## Patentansprüche

1. Druckempfindliches doppelseitiges Selbstklebeband für dauerhafte, irreversible Verklebungen, dadurch gekennzeichnet, daß das Selbstklebeband
eine Trägerschicht auf der Basis von Kautschuken mit Doppelbindungen in der Hauptkette, wobei die Kautschuke deratig vernetzt sind, daß die Kautschuke gummielastisches Verhalten aufweisen, und
eine beidseitig auf die Trägerschicht beschichtete, druckempfindliche Selbstklebemasse auf Basis eines Acrylats aufweist.

2. Selbstklebeband nach Anspruch 1, dadurch gekennzeichnet, daß die druckempfindliche Selbstklebemasse aus einem Copolymerisat von n-Butylacrylat mit 2-Etylhexylacrylat und Acrylsäure, insbesondere mit einer Zusammensetzung von 60 Gew.-% bis 70 Gew.-% n-Butylacrylat, 20 Gew.-% bis 40 Gew.-% 2-Etylhexylacrylat und 0 Gew.-% bis 8 Gew.-% Acrylsäure besteht.

3. Selbstklebeband nach den Ansprüchen 1 oder 2, dadurch gekennzeichnet, daß die für die Trägerschicht verwendeten Kautschuke ein Naturkautschuk, ein Acrylnitril-Butadienkautschuk, ein Random-Styrol-Butadien-Kautschuk oder ein Blend aus den genannten Kautschuken sind, besonders ein Blend aus einem Naturkautschuk und einem Random-Styrol-Butadien-Kautschuk.

4. Selbstklebeband nach den Ansprüchen 1 bis 3, dadurch gekennzeichnet, daß die für die Trägerschicht verwendeten Kautschuke mit einem oder mehreren Additiven wie Alterungsschutzmitteln, Vernetzern, Lichtschutzmitteln, Ozonschutzmitteln, Fettsäuren, Harzen, Weichmachern und Vulkanisationsmitteln abgemischt und die für die Trägerschicht verwendeten Kautschuke chemisch oder physikalisch vernetzt sind.

5. Selbstklebeband nach den Ansprüchen 1 bis 4, dadurch gekennzeichnet, daß die Trägerschicht mit einem oder mehreren Füllstoffen wie Ruß, Zinkoxid, Kieselsäure, Silikaten und Kreide gefüllt ist.

6. Selbstklebeband nach den Ansprüchen 1 bis 5, dadurch gekennzeichnet, daß die Trägerschicht eine Dicke von 200 µm bis 2000 µm, insbesondere 400 µm bis 1200 µm, aufweist.

7. Selbstklebeband nach den Ansprüchen 1 bis 6, dadurch gekennzeichnet, daß die Trägerschicht Mikrovollkugeln zu einem Volumenanteil von 1 Vol.-% bis 50 Vol.-%, insbesondere 10 Vol.-% bis 30 Vol.-%, enthält.

8. Selbstklebeband nach Anspruch 7, dadurch gekennzeichnet, daß die Mikrovollkugeln aus Glas bestehen.

9. Selbstklebeband nach Anspruch 8, dadurch gekennzeichnet, daß die Mikrovollkugeln aus Glas einen Durchmesser von 1 µm bis 100 µm, insbesondere 10 µm bis 60 µm, aufweisen und eine Dichte von 1,8 g/cm³ bis 6,0 g/cm³, insbesondere 1,9 g/cm³ bis 4,0 g/cm³, aufweisen.

10. Selbstklebeband nach den Ansprüchen 1 bis 9, dadurch gekennzeichnet, daß die Trägerschicht beidseitig einen haftvermittelnden Primer aufweist.

11. Selbstklebeband nach den Ansprüchen 1 bis 10, dadurch gekennzeichnet, daß die Trägerschicht zur Verbesserung der Haftung der Klebmassen Haftvermittler aufweist.

12. Selbstklebeband nach den Ansprüchen 1 bis 11, dadurch gekennzeichnet, daß zwischen der Trägerschicht und der Selbstklebemasse eine Sperrschicht mit einer Schichtdicke von 2 µm bis 10 µm, vorzugsweise 2 µm bis 4 µm, vorgesehen ist.

13. Selbstklebeband nach Anspruch 12, dadurch gekennzeichnet, daß die Sperrschicht eine Polyamidsperrschicht ist.

14. Selbstklebeband nach den Ansprüchen 1 bis 13, dadurch gekennzeichnet, daß die Selbstklebemasse mit einem Flächengewicht von 10 g/m² bis 250 g/m², vorzugsweise 40 g/m² bis 150 g/m², auf die Trägerschicht aufgetragen ist.

15. Verwendung eines Selbstklebebandes nach Ansprüchen 1 bis 14 zur Erzielung von dauerhaften Verklebungen mit hoher Scherfestigkeit, hoher Klebkraft und hoher kälteschlagfestigkeit in einem Temperaturbereich von -40 °C bis 80 °C, insbesondere bei Temperaturen zwischen 70 °C und 80 °C.
